# EUROPÄISCHE PATENTSCHRIFT

(11) **EP 1 269 825 B1**
(45) Veröffentlichungstag und Bekanntmachung des Hinweises auf die Patenterteilung: **27.08.2008**
(21) Anmeldenummer: 02013051.4
(22) Anmeldetag: 13.06.2002
(51) Int. Cl.: A01D 67/00, A01D 41/12

(54) **Stützradanordnung für eine landwirtschaftliche Arbeitsmaschine**
Support wheel arrangement for an agricultural working machine
Agencement de roue porteuse pour une machine agricole

(30) Priorität: 27.06.2001 DE 10130653
(43) Veröffentlichungstag der Anmeldung: 02.01.2003
(73) Patentinhaber: CLAAS Selbstfahrende Erntemaschinen GmbH, 33428 Harsewinkel (DE)
(72) Erfinder: Heidjann, Franz, 33428 Harsewinkel (DE); Holtmann, Bernd, 48324 Sendenhorst (DE)

(56) Entgegenhaltungen:
- DE-A- 1 457 948
- DE-A- 2 101 710
- DE-A- 19 918 551
- FR-A- 1 040 493
- GB-A- 1 093 473
- US-A- 4 203 275

## Beschreibung

Die Erfindung betrifft ein Verfahren gemäß dem Oberbegriff des Anspruchs 1 und eine Vorrichtung nach dem Oberbegriff des Anspruchs 6.

Aus der DE 199 18 551 ist eine als Feldhäcksler ausgeführte gattungsgemäße landwirtschaftliche Erntemaschine bekannt geworden, die frontseitig über einen ein landwirtschaftliches Arbeitsgerät aufnehmenden Zwischenanbau verfügt. Damit die Last des landwirtschaftlichen Arbeitsgerätes nicht ausschließlich über die in Fahrtrichtung vorn liegende Trägerfahrzeugachse abgestützt werden muss, sind in zumindest einem Ausführungsbeispiel dem Zwischenanbau Stützräder zugeordnet, die es ermöglichen, dass bei Straßentransport zumindest ein Teil der Masse des landwirtschaftlichen Arbeitsgerätes über diese Stützräder auf dem Boden abgestützt wird. Dies hat zunächst den Vorteil, dass die frontseitige Trägerfahrzeugachse bei Straßenfahrt nicht die gesamte Last des adaptierten landwirtschaftlichen Arbeitsgerätes abstützen muss. Die Adaptierung der Stützräder am Zwischenanbau der landwirtschaftlichen Arbeitsmaschine erfordert jedoch eine erhebliche Versteifung dieses Zwischenanbaus, da beim Fahren auf unebenem Gelände erhebliche Stoßbelastungen auftreten können, die von dem Zwischenanbau aufgenommen werden müssen. Aufgrund dessen, dass die Achsen der Stützräder direkt an dem Zwischenanbau der landwirtschaftlichen Erntemaschine angeordnet sind, ist eine Vertikalbewegung der Stützräder relativ zu diesem Zwischenanbau nicht möglich. Dies führt dazu, dass beim Anheben des Zwischenanbaues die von den Stützrädern auf den Boden übertragene Last allmählich abnimmt und in dem Moment gleich Null wird, wenn die Stützräder ihren Kontakt zum Boden verloren haben. Die Abnahme der Stützfunktion der Stützräder bei angehobenem Zwischenanbau erfordert somit trotz Stützradanordnung eine Dimensionierung der Achsen der landwirtschaftlichen Erntemaschine entsprechend der möglichen Maximalbelastung.

Die DE 1 457 948 offenbart einen Mähdrescher mit vor den Antriebsrädern angeordneten Stützrädern. Die Stützräder sind auf einer Achse angeordnet, deren Enden federnd in Halterungen aufgenommen sind, die über Tragarme mit dem Achsgehäuse des Mähdreschers verbunden sind. Die Stützräder berühren nur dann den Boden, wenn die Antriebsräder in den Boden eingesunken sind und nehmen dabei einen Teil der Achslast auf, um die vorderen Antriebsräder zu entlasten. In diesen Fällen übernehmen die Stützräder einen Teil der vorderen Achslast und verhindern damit, dass die Antriebräder weiter in den Boden eindrücken. Die von den Stützrädem aufgenommenen Last kann durch in die Halterungen eingesetzte Federn begrenzt werden, damit die Stützradbelastung einen vorgegebenen Wert nicht überschreiten kann.

Die US 4 203 275 offenbart einen Traktor mit einem Schneidwerk zum Ernten von Mais. Das Schneidwerk ist Ober eine Haltevorrichtung höhenverschwenkbar mit dem Traktor verbunden. Das Schneidwerk wird über Stellglieder auf- und abgesenkt, um die Lastverteilung auf die Räder des Traktors und die unterhalb des Schneidwerks am Schneidwerk angeordneten Stützräder zu verändern. Indem bei nassem Boden die Stützräder abgesenkt werden, wird die auf die Räder des Traktors wirkenden Last reduziert.

Nachteilig sowohl bei der DE 1 457 948 als auch bei der US 4 203 275 ist, dass die Stützräder nicht permanent den Boden berühren und damit die Achsen des Trägerfahrzeugs nicht ständig entlasten.

Der Erfindung liegt deshalb die Aufgabe zugrunde, eine Stützradanordnung für landwirtschaftliche Arbeitsmaschinen so weiterzubilden, dass die beschriebenen Nachteile des Standes der Technik vermieden werden und ein permanenter Kontakt der Stützradanordnung mit dem Boden gewährleistet ist.

Erfindungsgemäß wird die Aufgabe durch ein Verfahren zum Betreiben einer landwirtschaftlichen Arbeitsmaschine mit den kennzeichnenden Merkmalen des Anspruchs 1 und einer Vorrichtung gemäß den kennzeichnenden Merkmalen des Anspruchs 6 gelöst.

Indem die Stützlast des wenigstens einen im Bereich zwischen der landwirtschaftlichen Erntemaschine und dem ihr zugeordneten landwirtschaftlichen Arbeitsgerät adaptierten Stützrades einstellbar ist, wird sichergestellt, dass das wenigstens eine Stützrad eine permanente Entlastung der Achsen der landwirtschaftlichen Erntemaschine realisiert. Dies hat vor allem den Vorteil, dass die Achsen des Trägerfahrzeugs aufgrund der geringeren abzustützenden Lasten weniger materialintensiv und damit kostengünstiger hergestellt werden können.

Eine besonders vorteilhafte Weiterbildung der Erfindung ergibt sich dann, wenn der landwirtschaftlichen Erntemaschine eine Vielzahl von Stützrädern zugeordnet ist und die Stützlasten der Vielzahl von Stützrädern unabhängig voneinander einstellbar sind. Neben einer weiteren Entlastung der Trägerfahrzeugachsen ermöglicht die Anordnung einer Vielzahl von Stützrädem die Gewährleistung niedriger Bodendrücke.

In vorteilhafter Weiterbildung der Erfindung kann die Einstellbarkeit der Stützlast des wenigstens einen Stützrades auch dazu herangezogen werden, den Bodenauflagedruck des an die landwirtschaftliche Erntemaschine adaptierten Erntevorsatzes einzustellen.

Um stets sicherzustellen, dass der von der Triebachse und/oder der Lenkachse der landwirtschaftlichen Erntemaschine abzustützende Lastanteil den durch verschiedenen Normen vorgeschriebenen Lastanteilen entspricht, kann in einer weitem vorteilhaften Ausgestaltung der Erfindung die Stützlast des wenigstens einen Stützrades in Abhängigkeit von den Lastanteilen der Triebachse und/oder Lenkachse eingestellt werden.

Um vor allem bei landwirtschaftlichen Erntemaschinen mit Vorratsbehälter sicherzustellen, dass mit zunehmendem Befüllgrad des Vorratsbehälters und damit mit zunehmender Maschinenmasse der von dem wenigstens einen Stützrad abzustützende Lastanteil ebenfalls zunimmt, kann die Stützlastverteilung dynamisch anpassbar ausgeführt sein.

Auf konstruktiv besonders einfache Weise wird die Einstellbarkeit der Stützlast des wenigstens einen Stützrades dadurch erreicht, dass das wenigstens eine Stützrad eine im Wesentlichen in vertikaler Richtung weisenden Relativbewegung zur Aufnahmevorrichtung und/oder zur landwirtschaftlichen Erntemaschine ausführen kann, wobei diese vertikale Relativbewegung im einfachsten Fall dadurch erreicht wird, dass dem wenigstens einen Stützrad ein sich im Wesentlichen in vertikaler Richtung erstreckender Hubzylinder zugeordnet ist, der das Stützrad mit der Aufnahmevorrichtung und/oder der landwirtschaftlichen Erntemaschine verbindet.

Auf besonders einfache Weise kann das permanente Kontaktieren des Boden durch das wenigstens eine Stützrad dadurch erreicht werden, dass der die vertikale Bewegung des Stützrades realisierende Hubzylinder in Wirkverbindung mit dem oder den Hubzylindern der Aufnahmevorrichtung steht, sodass das Anheben der Aufnahmevorrichtung selbsttätig zu einem Absenken des wenigstens einen Stützrades führt und umgekehrt das Absenken der Aufnahmevorrichtung das selbsttätige Anheben des wenigstens einen Stützrades nach sich zieht.

Um die von der Belastung der Triebachse und/oder Lenkachse abhängige Lastverteilung auf das wenigstens eine Stützrad in konstruktiv einfacher Weise zu ermöglichen, können der Triebachse und/oder der Lenkachse an sich bekannte lastsensierende Aufnehmer zugeordnet sein, die über eine Steuereinheit ein lastabhängiges Ausgangssignal für die Regelung des Hydraulikdrucks des Hubzylinders des wenigstens einen Stützrades generieren.

Um unter bestimmten Bedingungen eine permanente Anpassung des von dem wenigstens einen Stützrad aufzunehmenden Lastanteils zu unterdrücken, kann in einer weiteren vorteilhaften Ausbildung der Erfindung der Hubzylinder des wenigstens einen Stützrades sperrbar sein, sodass das Stützrad nicht mehr in der Lage ist, eine Relativbewegung zur Aufnahmevorrichtung auszuführen.

Um eine dynamische Anpassung der Stützlast des wenigstens einen Stützrades an die Achslast der Triebachse und/oder Lenkachse der landwirtschaftlichen Erntemaschine zu erreichen, kann in einer weiteren vorteilhaften Ausgestaltung der Erfindung in den Hydraulikkreislauf des Hubzylinders des wenigstens einen Stützrades zumindest ein an sich bekanntes Proportionalventil integriert sein.

Um eine große Flexibilität in der Stützlastverteilung zu erreichen, kann in einer weiteren vorteilhaften Ausgestaltung der Erfindung das Verhältnis der Stützlasten in der elektronischen Verrechnungseinheit einstellbar sein.

Soll die Lastverteilung zwischen wenigstens einer Achse der landwirtschaftlichen Erntemaschine und dem wenigstens einen Stützrad stets in einem festen Verhältnis zueinander erfolgen, so kann diese Lastverteilung im einfachsten Fall dadurch erreicht werden, dass das Kolbenflächenverhältnis der Hubzylinder der Aufnahmevorrichtung und des Hubzylinders des wenigstens einen Stützrades dem Lastverteilungsverhältnis zwischen der Stützlast des wenigstens einen Stützrades und der von dem oder den Hubzylindern der Aufnahmevorrichtung auf die landwirtschaftliche Erntemaschine übertragenen Stützlast entspricht.

Damit die von dem wenigstens einen Stützrad zu übertragende Stützlast über dem gesamten Schwenkbereich der Aufnahmevorrichtung und des mit ihr in Wirkverbindung stehenden Stützrades annährend gleich bleibt, nimmt der Hubzylinder des wenigstens einen Stützrades eine annähernd vertikale Position ein.

Damit sich das wenigstens eine Stützrad auch bei nicht adaptierten landwirtschaftlichen Arbeitsgerät auf dem Boden bewegt, kann zwischen Aufnahmevorrichtung und landwirtschaftlicher Arbeitsmaschine eine Zugstange zwischengeschaltet sein, die das wenigstens eine Stützrad stets in Richtung Boden zwingt.

Um die Lenkbarkeit der landwirtschaftlichen Erntemaschine zu unterstützen, kann das wenigstens eine Stützrad in einer vorteilhaften Weiterbildung der Erfindung lenkbar ausgeführt sein.

Weiter vorteilhafte Ausgestaltungen sind Gegenstand weiterer Unteransprüche und werden anhand von Zeichnungen näher erläutert.

Es zeigen:
- Figur 1: die Seitenansicht der erfindungsgemäßen landwirtschaftlichen Erntemaschine
- Figur 2: eine Detailansicht der erfindungsgemäßen Stützradanordnung
- Figur 3: ein erstes Ausführungsbeispiel der erfindungsgemäßen Hubzylinderkopplung
- Figur 4: ein weiteres Ausführungsbeispiel der erfindungsgemäßen Hubzylinder-kopplung

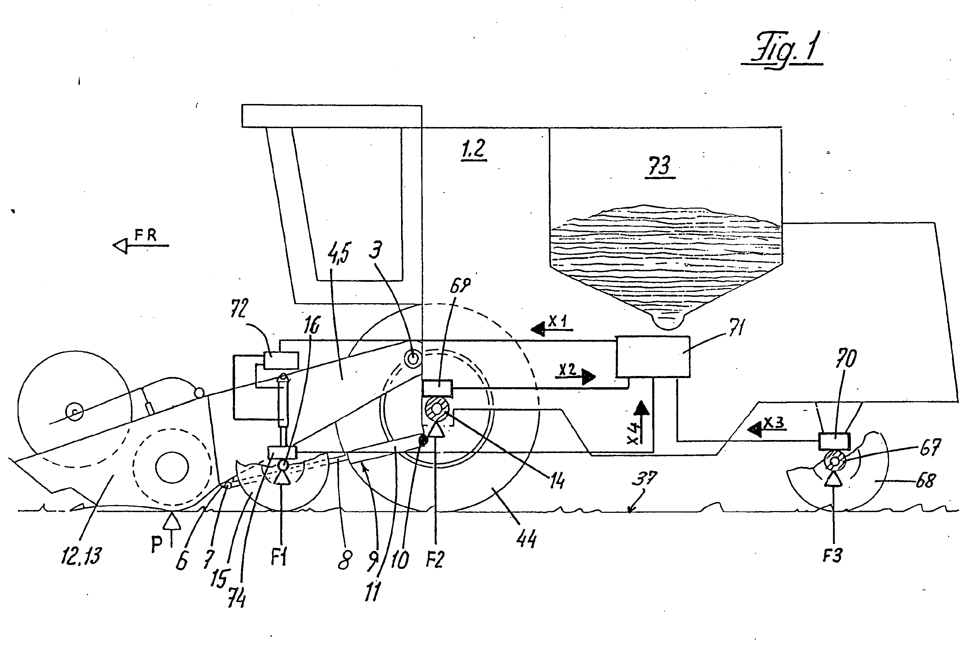

In Figur 1 ist eine als Mähdrescher 2 ausgeführte landwirtschaftliche Erntemaschine 1 dargestellt, die in ihrem frontseitigen Bereich eine quer zur Fahrtrichtung FR weisende Schwenkachse 3 aufnimmt, die wiederum die als an sich bekannter Schrägförderer 4 ausgeführte Aufnahmevorrichtung 5 in vertikaler Richtung verschwenkbar aufnimmt. Untenseitig sind dem Schrägförderer 4 Halteflansche 6 angeformt, die einenends um eine quer zur Fahrrichtung FR weisende Achse 7 verschwenkbar die frontseitigen Enden der Kolbenstangen 8 von Hubzylindern 9 aufnehmen. Trägerfahrzeugseitig sind die Hubzylinder 9 um ebenfalls quer zur Fahrtrichtung FR weisende Achsen 10 schwenkbeweglich an der landwirtschaftlichen Erntemaschine 1 angeordnet. Indem die Hubzylinder 9 druckbeaufschlagt oder druckentlastet werden, bewegen sich die Kolbenstangen 8 aus den Zylindern 11 der Hubzylinder 9 heraus oder tauchen in diese ein, sodass die Aufnahmevorrichtung 5 eine Schwenkbewegung in vertikaler Richtung um die am Trägerfahrzeug 1 angeordnete Achse 3 ausführt. Neben der Realisierung der Schwenkbewegung der Aufnahmevorrichtung 5 haben die Hubzylinder 9 zudem die Aufgabe, die Aufnahmevorrichtung 5 am Trägerfahrzeug 1 abzustützen.

Frontseitig ist der Aufnahmevorrichtung 5 in an sich bekannter und deshalb nicht näher beschriebener Weise ein als Getreideschneidwerk 12 ausgeführtes landwirtschaftliches Arbeitsgerät 13 zugeordnet.

Damit die Last der Aufnahmevorrichtung 5 und des an ihr adaptierten landwirtschaftlichen Arbeitsgerätes 13 nicht allein über die Hubzylinder 9 in das Trägerfahrzeug 1 im Bereich seiner Vorderachse 14 eingeleitet wird, sind der Aufnahmeeinrichtung 5 im Bereich zwischen dem Getreideschneidwerk 12 und der Vorderachse 14 des Mähdreschers 2 beidseitig Stützräder 15 zugeordnet. Die Radachse 16 jedes Stützrades 15 wird von einer Nabe 17 umschlossen, der an ihrem innenseitigen, im Bereich der Stützräder 15 liegenden Ende ein Aufnahmeflansch 18 angeformt ist, der von einer in vertikaler Richtung weisenden im einfachsten Fall als axial gesicherter Bolzen 19 ausgeführten Schwenkachse 20 durchsetzt wird. Im Felgenbereich 21 der Stützräder 15 durchsetzt die vertikale Schwenkachse 20 zudem eine Führungsöse 22, die anderenends an wenigstens einem ersten Tragarm 23 befestigt ist. Im dargestellten Ausführungsbeispiel ist jedem Stützrad 15 ein solcher Tragarm 23 zugeordnet, wobei jeder Tragarm 23 an seinem das jeweilige Stützrad 15 aufnehmenden Ende von einem beliebig geformten Kopfstück 24 gebildet wird, dem trägerfahrzeugseitig ein Winkelprofilträger 25 mit sich in Richtung der Vorderachse 14 des Trägerfahrzeugs 1 vergrößerndem Querschnitt angeschweißt ist. Der Vorderachse 14 der landwirtschaftlichen Arbeitsmaschine 1 sind frontseitig Halteflansche 26 zugeordnet, die von im einfachsten Fall als axial gesicherte Bolzen 27 ausgeführten quer zur Fahrtrichtung FR weisenden Achsen 28 durchsetzt werden. Der Abstand zwischen benachbarten Halteflanschen 26 wird von den flanschartigen Verlängerungen 29 der Winkelprofilträger 25 in der Weise durchsetzt, dass der jeweilige Bolzen 27 den ihm zugeordneten Winkelprofilträger 25 in vertikaler Richtung verschwenkbar aufnimmt. Auf diese Weise ist der wenigstens eine erste Tragarm 23 eines Stützrahmens 30 schwenkbeweglich mit der landwirtschaftlichen Erntemaschine 1 im Bereich ihrer Vorderachse 14 verbunden.

Dem Kopfstück 24 des ersten Tragarms 23 ist auf der dem jeweiligen Stützrad 15 abgewandten Seite eine Haltelasche 31 angeformt. Die jeweilige Haltelasche 31 nimmt das frontseitige Ende der Kolbenstange 32 eines Hubzylinders 33 um eine quer zur Fahrtrichtung FR weisende Achse 34 schwenkbar auf, wobei das zylinderseitige Ende des Hubzylinders 33 um eine ebenfalls quer zur Fahrtrichtung FR angeordnete Achse 35 schwenkbar an der Aufnahmevorrichtung 5 der landwirtschaftlichen Erntemaschine 1 befestigt ist. Damit bildet der jeweilige Hubzylinder 33 einen weiteren Tragarm 36 des Stützrahmens 30, der das wenigstens eine Stützrad 15 schwenkbeweglich mit der Aufnahmevorrichtung 5 der landwirtschaftlichen Erntemaschine 1 verbindet. Auf diese Weise wird jedes der Stützräder 15 über einen aus einem ersten Tragarm 25 und wenigstens einem weiteren Tragarm 36 bestehenden Stützrahmen 30 sowohl mit der landwirtschaftlichen Erntemaschine 1 als auch der Aufnahmevorrichtung 5 verbunden. Es liegt im Rahmen der Erfindung, dass der im Ausführungsbeispiel zweiteilig ausgeführte Stützrahmen 30 einteilig gestaltet ist und dieser einteilige Stützrahmen 30 über eine oder mehrere quer zur Fahrtrichtung FR angeordnete Schwenkachsen 28 schwenkbar an der landwirtschaftlichen Erntemaschine 1 angeordnet wird. Auch wäre es denkbar, dass die Aufnahmevorrichtung 5 über nur einen Hubzylinder 9 oder eine beliebige Anzahl von Hubzylindern 9 an der landwirtschaftlichen Erntemaschine 1 abgestützt wird.

Indem die zweiten Tragarme 36 als Hubzylinder 33 ausgeführt sind ist gewährleistet, dass die Zuordnung der Stützräder 15 zur Aumahmevorrichtung 5 in vertikaler Richtung verändert werden kann, sodass die Stützräder 15 unabhängig von der Lage der Aufnahmevorrichtung 5 stets den Boden 36 berühren können.

Zudem ermöglicht eine solche Ausführung, dass in erfindungsgemäßer Weise die am Boden 37 abzustützende Stützlast F1 des wenigstens einen Stützrades 15 einstellbar ist. Es liegt im Rahmen der Erfindung, der Aufnahmevorrichtung 5 eine Vielzahl von Stützrädern 15 zuzuordnen, von denen zumindest ein Teil mittels Hubzylinder 33 einstellbare Stützlasten F1 auf den Boden 37 übertragen. Eine im Folgenden noch näher zu beschreibende besonders vorteilhafte Ausführung der in ihrer Stützlast F1 einstellbaren Stützräder 15 wird dann erreicht, wenn diese Einstellbarkeit der Stützlast F1 zugleich die Regelung des Auflagedrucks p des landwirtschaftlichen Arbeitsgerätes 13 auf dem Boden 37 ermöglicht.

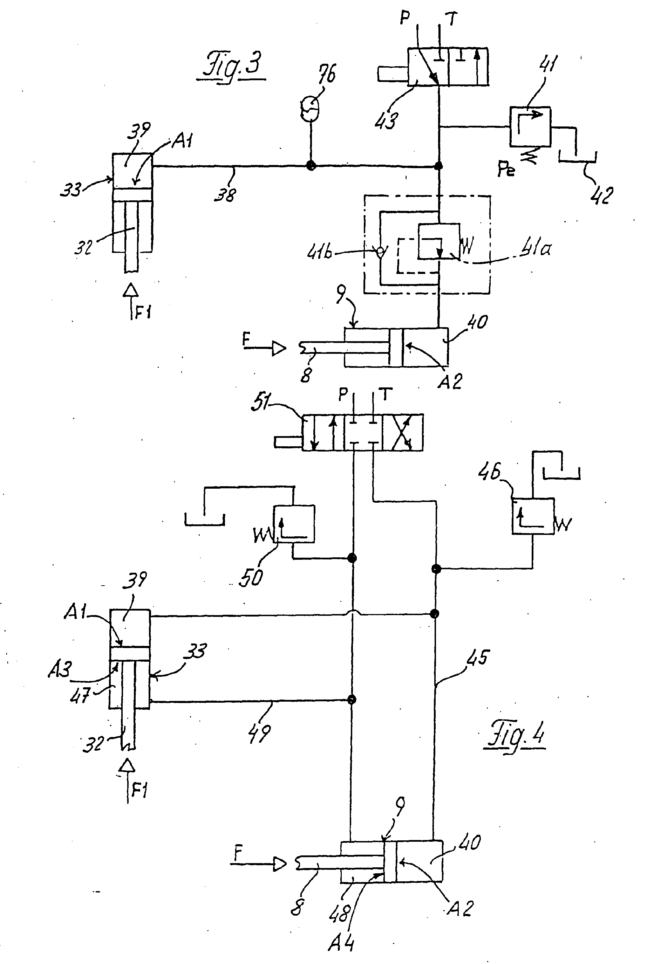

In einem ersten Ausführungsbeispiel nach Figur 3 sind der Hubzylinder 33 des wenigstens eine Stützrades 15 und der oder die Hubzylinder 9 der Aufhahmevorrichtung 5 als einfachwirkende Hubzylinder 9, 33 ausgeführt, wobei über eine Systemleitung 38 die kolbenflächenseitigen Druckkammern 39, 40 der Hubzylinder 9, 33 miteinander verbunden sind. Der Systemleitung 38 ist ferner zumindest ein Druckbegrenzungsventil 41 zugeschaltet, welches den Druck in der Systemleitung 38 begrenzt und bei Überschreitung des am Druckbegrenzungsventil 41 einstellbaren Druckschwellwertes pₑ die Systemleitung mit dem Tank 42 verbindet, sodass ein Teil des energieübertragenden Mediums in den Tank 42 abfließen kann. Es liegt im Rahmen der Erfindung, dass das parallel geschaltete Druckbegrenzungsventil 41 auch durch ein in Reihe zu dem wenigstens einen Hubzylinder 9 der Aufnahmevorrichtung 5 geschalteten Druckbegrenzungsventil 41a ersetzt sein kann, welches den Hubzylinder 9 der Aufnahmevorrichtung 5 von der Systemleitung 38 trennt sobald der Leitungsdruck den Einstellwert pₑ erreicht hat. Bei Ausführungen schaffen die Möglichkeit, die von dem oder den Hubzylindern 9 der Aufnahmevorrichtung 5 auf die Achse 14 der landwirtschaftlichen Erntemaschine übertragene Stützlast F auf einen festen Wert zu begrenzen, wodurch ebenfalls die Stützlast F2 an der Achse 14 der landwirtschaftlichen Erntemaschine 1 auf einen festen Wert begrenzbar ist.

Damit bei gesperrtem Druckbegrenzungsventil 41a die Kolbenstange 8 der Hubzylinder 9 dennoch einfahren kann, ist dem Druckbegrenzungsventil 41a im einfachsten Fall ein in Richtung Druckspeicher 76 öffnendes Rückschlagventil 41b zugeordnet. Dies führt dazu, dass auch bei geschlossenem Druckbegrenzungsventil 41b betriebesbedingte Druckspitzen in der kolbenseitigen Druckkammer 40 des oder der Hubzylinder 9 der Aufnahmevorrichtung 5 abgebaut werden können.

Über ein schaltbares 2/2-Wegeventil 43 ist die Systemleitung 38 zudem mit der in an sich bekannter Weise in die landwirtschaftliche Erntemaschine 1 integrierten Pumpe P oder dem Tank T verbunden. Eine Druckbeaufschlagung der Systemleitung 38 führt dazu, dass die Kolbenstangen 8, 32 aus den jeweiligen Hubzylindern 9, 33 herausgeschoben werden. Dabei führt die Aufnahmevorrichtung 5 eine Schwenkbewegung um ihre obenseitige, am Trägerfahrzeug 1 angeordnete Schwenkachse 3 in eine bodenferne Position aus. Gleichzeitig bewegt sich das von dem anderen Hubzylinder 33 höhenbeweglich an der Aufnahmevorrichtung 5 angeordnete wenigstens eine Stützrad 15 in Richtung Boden, sodass stets gewährleistet ist, dass das wenigstens eine Stützrad 15 mit dem Boden 37 in Kontakt steht. Aufgrund dessen, dass die miteinander gekoppelten Hubzylinder 9, 33 einfachwirkend ausgeführt sind, führt das schwerkraftbedingte Absenken der Aufnahmevorrichtung 5 gleichzeitig zu einem ebenfalls schwerkraftbedingten Einfahren des das wenigstens eine Stützrad 15 höhenbeweglich aufnehmenden Hubzylinders 33. Bei einer derartigen Ausführung ist somit sichergestellt, dass das Verhältnis zwischen der von dem wenigstens einen Stützrad 15 zu übertragenden Stützlast F1 und der an die Laufrädern 44 der benachbarten Vorderachse 14 mittels des oder der Hubzylinder 9 zu übertragenden Stützlast F stets konstant ist, wobei dieses Verhältnis dem Verhältnis der Kolbenflächen A1, A2 der miteinander gekoppelten Hubzylinder 9, 33 entspricht. Es liegt im Rahmen der Erfindung, dass die gemäß Figur 3 einfachwirkend ausgeführten Hubzylinder 9, 33 auch entsprechend Figur 4 doppeltwirkend ausgeführt sein können. Hierbei sind die kolbenflächenseitigen Druckräume 39, 40 über ein Leitungssystem 45 miteinander und mit einem einstellbaren Druckbegrenzungsventil 46 verbunden. Die kolbenstangenseitigen Druckräume 47, 48 der besagten Hubzylinder 9, 33 sind ebenfalls über ein Leitungssystem 49 miteinander und mit einem Druckbegrenzungsventil 50 verbunden. Beide Druckbegrenzungsventile 46, 50 entsprechen in ihrer Funktion dem bereits beschriebene Druckbegrenzungsventil 41 beim Einsatz einfachwirkender Hubzylinder 9, 33. Über ein 3/2-Wegeventil 51 sind die Leitungssysteme 45, 49 und damit die Hubzylinder 9, 33 mit der Pumpe P und dem Tank T der landwirtschaftlichen Erntemaschine 1 verbunden. Auch bei Verwendung von doppeltwirkenden Hubzylindern 9, 33 führt die Druckbeaufschlagung der kolbenflächenseitigen Druckkammern 39, 40 zum Anheben der Aufnahmevorrichtung und zum Absenken des wenigstens einen Stützrades 15. Umgekehrt führt die Druckbeaufschlagung der kolbenstangenseitigen Druckkammern 47, 48 der miteinander gekoppelten Hubzylinder 9, 33 zu einem Absenken der Aufnahmevorrichtung 5 bei gleichzeitigem Anheben des wenigstens einen Stützrades 15. Auch bei dieser Ausführung wird sichergestellt, dass das wenigstens eine Stützrad 15 permanenten Kontakt zum Boden 37 hat, wobei hier die Stützlastverhältnisse F1/F nun von dem Verhältnis der Kolbenflächen A1 und A2 und dem Verhältnis der kolbenstangenseitigen Kolbenflächen A3 und A4 abhängen. Es liegt im Rahmen der Erfindung, dass den Leitungssystemen 38, 45, 49 Druckspeicher 76 gemäß Figur 3 zugeordnet sein können, um stoßartige Belastung zu vermeiden.

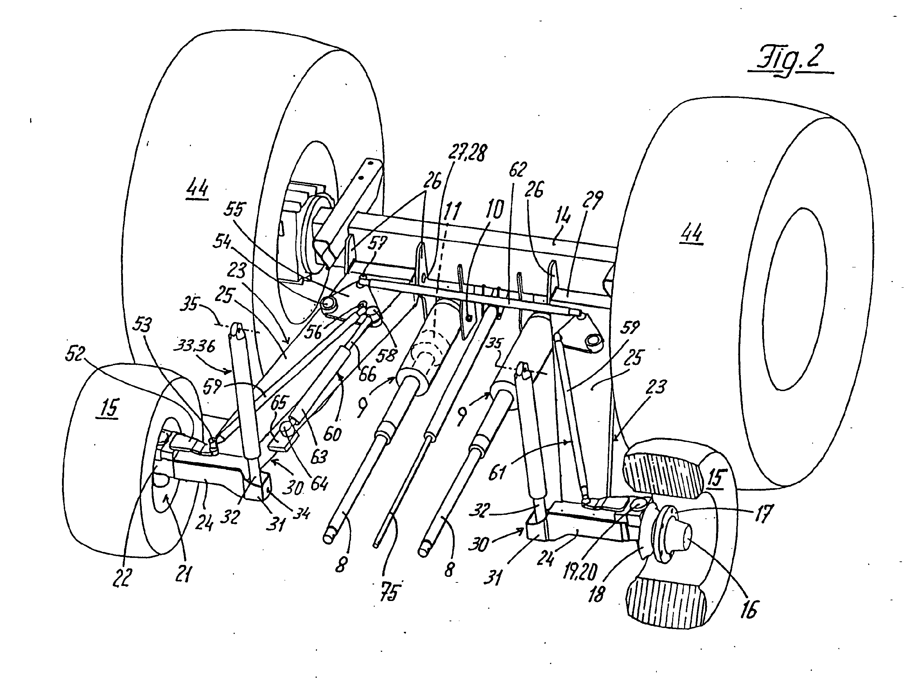

Gemäß Figur 2 können die Stützräder 15 auch um die vertikale Schwenkachse 20 verschwenkbar ausgeführt sein, wobei der die Schwenkachse 20 bildende Bolzen 19 obenseitig von einem Lenkhebel 52 umgriffen wird, dem einenends ein in vertikaler Richtung weisender Stehbolzen 53 zugeordnet ist. Der das jeweilige Stützrad 15 aufnehmende Tragarm 23 verfügt an seinem der Vorderachse 14 der landwirtschaftlichen Erntemaschine 1 zugeordneten Ende über einen in vertikaler Richtung weisenden Stehbolzen 54. An dem Stehbolzen 54 ist ein Winkelhebel 55 schwenkbeweglich angeordnet, dem wiederum eine Vielzahl von Stehbolzen 56, 57, 58 drehfest zugeordnet sind. Eine erste Koppelstange 59 verbindet den Stehbolzen 53 des Lenkhebels 52 schwenkbeweglich mit einem auf dem Winkelhebel 55 angeordneten Stehbolzen 56, wobei sich die Koppelstange 59 oberhalb und im Bereich des Winkelprofilträgers 25 des jeweiligen Tragarms 23 in Richtung Vorderachse 14 der landwirtschaftlichen Erntemaschine 1 erstreckt. Im dargestellten Ausführungsbeispiel sind den benachbarten Stützrädern 15 zueinander spiegelbildlich angeordnete Lenkhebel 52, Koppelstangen 59 und Winkelhebel 55 zugeordnet, die jeweils einen Teillenkmechanismus 60, 61 für das jeweilige Stützrad 15 bilden. Im Bereich der Vorderachse 14 sind die beiden Teillenkmechanismen 60, 61 über eine mit den rückwärtigen Stehbolzen 57 der Winkelhebel 55 schwenkbeweglich verbundene Verbindungsstrebe 62 miteinander gekoppelt. Einem der Winkelhebel 55 ist über einen weiteren Stehbolzen 58 ein Lenkzylinder 63 schwenkbeweglich zugeordnet, der anderenends ebenfalls um eine vertikale Achse 64 schwenkbar von einem an dem Winkelprofilträger 25 befestigten Halteflansch 65 aufgenommen wird. Durch Druckbeaufschlagung des doppeltwirkenden Lenkzylinders 63 kann die Kolbenstange 66 aus dem Lenkzylinders 63 herausgeschoben oder in diesen hineinbewegt werden, wobei die Stützräder 15 gleichgerichtete Schwenkbewegungen um ihre vertikalen Schwenkachsen 20 ausführen. Es liegt im Rahmen der Erfindung, dass der landwirtschaftlichen Erntemaschine 1 nur ein erfindungsgemäß lenkbares Stützrad 15 oder eine Vielzahl von erfindungsgemäß lenkbaren Stützrädern 15 zugeordnet sind oder bei Anordnung mehrerer Stützräder 15 nur ein Teil der Stützräder 15 lenkbar ist. Zudem kann die Lenkbewegung der gelenkten Achse 67 der landwirtschaftlichen Erntemaschine 1 mit ihren Laufrädern 68 und die Lenkbewegung der erfindungsgemäßen Stützräder 15 aneinander gekoppelt sein.

Um stets zu gewährleisten, dass die landwirtschaftliche Erntemaschine 1 sicher lenk- und antreibbar ist, kann in einem weiteren Ausführungsbeispiel gemäß Figur 1 jeder Achse 14, 67 der landwirtschaftlichen Erntemaschine 1 zumindest ein an sich bekannter lastsensierender Aufnehmer 69, 70 zugeordnet sein, der beispielsweise als Dehnmessstreifen zur Ermittlung der Durchbiegung der Achsen 14, 67 oder als Drucksensor zur Ermittlung des Reifendrucks der Laufräder 44, 68 ausgeführt ist. Die lastsensierenden Aufnehmer 69, 70 generieren in Abhängigkeit von der jeweiligen Stützlast F2, F3 Eingangssignale X2, X3, die in einer elektronischen Verrechnungseinheit 71 in Abhängigkeit von einem vordefinierten und gegebenenfalls beliebig änderbaren Lastverteilungsverhältnis ein Ausgangssignal X1 erzeugen, welches über ein beliebig ausgeführtes Schaltventil 72 zu einer Druckbeaufschlagung oder Druckentlastung des Hubzylinders 33 des wenigstens einen Stützrades 15 führt. Auf diese Weise wird es möglich, die Stützlast F1 des wenigstens einen Stützrades 15 in Abhängigkeit von den Stützlasten F2, F3 der Achsen 14, 67 der landwirtschaftlichen Erntemaschine 1 einzustellen. Ferner kann dem wenigstens einen Stützrad 15 ein lastsensierender Aufnehmer 74 zugeordnet sein, der ein von der Stützlast F3 abhängiges Eingangssignal X4 generiert, welches in der elektronischen Verrechnungseinheit 71 als Maß für den durch das landwirtschaftliche Arbeitsgerät 13 auf den Boden 37 wirkenden Druck p heranziehbar ist. Auf diese Weise wird es möglich, die Stützlastverteilung auch in Abhängigkeit von der Abstützung des landwirtschaftlichen Arbeitsgerätes 13 auf dem Boden 37 einzustellen.

Da als Mähdrescher 2 ausgeführte landwirtschaftliche Erntemaschinen 1 in der Regel über eine Erntegutspeichereinrichtung 73 verfügen, ändert sich die Masse der landwirtschaftlichen Erntemaschine 1 und damit die an den Achsen 14, 67 angreifenden Stützlasten F2, F3 permanent. Um nun trotz sich während des Ernteprozesses ändernder Stützlasten F2, F3 eine kontinuierliche Anpassung der Stützlast F1 des wenigstens eine Stützrades 15 zu erreichen, kann das Schaltventil 72 als an sich bekanntes Proportionalventil 72 ausgeführt sein, dessen Steuersignal X1 zu einer permanenten Anpassung der Stützlast F1 an die sich ändernde Masse der landwirtschaftlichen Erntemaschine 1 führt.

Damit beim Ausheben und Absenken des wenigstens einen Stützrades 15 der Einfluss dieser Lageänderung auf die Stützlast F1 dieses wenigstens einen Stützrades 15 gering bleibt, ist der die Lageänderung ermöglichende Hubzylinder 33 in einer im Wesentlichen vertikalen Richtung an der Aufnahmevorrichtung 5 angeordnet.

Soll eine Anpassung der Stützlast F1 des wenigstens einen Stützrades 15 an die übrigen Stützlasten F2, F3 unterbleiben, so liegt es im Rahmen der Erfindung, dass der Hubzylinder 33 des wenigstens einen Stützrades 15 in an sich bekannter und deshalb nicht beschriebener Weise auch gesperrt werden kann.

Um auch bei fehlendem landwirtschaftlichen Arbeitsgerät 13 sicherzustellen, dass die erfindungsgemäßen Stützräder 15 eine Mindestlast auf dem Boden 37 abstützen, können einerseits die die Aufnahmevorrichtung 5 verschwenkenden Hubzylinder 9 als doppelt wirkende Hubzylinder 9 ausgeführt sein, sodass über die in den Zylinder 11 der Hubzylinder 9 einfahrende Kolbenstange 8 festgelegt werden kann, wie hoch die von den Stützräder 15 auf dem Boden 37 abzustützende Last sein soll. Sind die die Aufnahmevorrichtung 5 verschwenkenden Hubzylinder 9 einfachwirkend ausgeführt, kann zwischen Aufnahmevorrichtung 5 und der landwirtschaftlichen Erntemaschine 1 ein Zugzylinder 75 zwischengeschaltet sein, der bei Druckbeaufschlagung die erfindungsgemäßen Stützräder 15 auf den Boden 37 zwingt, wobei über die Druckbeaufschlagung des Zugzylinders 75 die Größe der abzustützenden Last F1 bestimmbar ist.

### Bezugszeichenliste

- 1: landwirtschaftliche Erntemaschine
- 2: Mähdrescher
- 3: Schwenkachse
- 4: Schrägförderer
- 5: Aufnahmevorrichtung
- 6: Halteflansch
- 7: Achse
- 8: Kolbenstange
- 9: Hubzylinder
- 10: Achse
- 11: Kolben
- 12: Getreideschneidwerk
- 13: landwirtschaftliches Arbeitsgerät
- 14: Vorderachse
- 15: Stützrad
- 16: Radachse
- 17: Nabe
- 18: Aufnahmeflansch
- 19: Bolzen
- 20: Schwenkachse
- 21: Felgenbereich
- 22: Führungsöse
- 23: Tragarm
- 24: Kopfstück
- 25: Winkelprofilträger
- 26: Halteflansch
- 27: Bolzen
- 28: Achse
- 29: Verlängerung
- 30: Stützrahmen
- 31: Haltelasche
- 32: Kolbenstange
- 33: Hubzylinder
- 34: Achse
- 35: Schwenkachse
- 36: Tragarm
- 37: Boden
- 38: Systemleitung
- 39: kolbenflächenseitiger Druckraum
- 40: kolbenflächenseitiger Druckraum
- 41/41a: Druckbegrenzungsventil
- 41a: Druckbegrenzungsventil
- 41b: Rückschlagventil
- 42: Tank
- 43: 2/2-Wegeventil
- 44: Laufrad
- 45: Leitungssystem
- 46: Druckbegrenzungsventil
- 47: kolbenstangenseitiger Druckraum
- 48: kolbenstangenseitiger Druckraum
- 49: Leitungssystem
- 50: Druckbegrenzungsventil
- 51: 3/2-Wegeventil
- 52: Lenkhebel
- 53: Stehbolzen
- 54: Stehbolzen
- 55: Winkelhebel
- 56: Stehbolzen
- 57: Stehbolzen
- 58: Stehbolzen
- 59: Koppelstange
- 60: Teillenkmechanismus
- 61: Teillenkmechanismus
- 62: Verbindungsstrebe
- 63: Lenkzylinder
- 64: vertikale Schwenkachse
- 65: Halteflansch
- 66: Kolbenstange
- 67: Achse
- 68: Laufrad
- 69: Aufnehmer
- 70: Aufnehmer
- 71: elektronische Verrechnungseinheit
- 72: Schaltventil
- 73: Emtegutspeichereinrichtung
- 74: Aufnehmer
- 75: Zugzylinder
- 76: Druckspeicher
- FR: Fahrtrichtung
- F: Stützlast am Hubzylinder 9
- F1: Stützlast
- F2: Stützlast
- F3: Stützlast
- p: Druck
- pₑ: Einstelldruck
- T: Tank
- P: Pumpe
- X1: Steuersignal
- X2: Eingangssignal
- X3: Eingangssignal
- X4: Eingangssignal

## Patentansprüche

1. Verfahren zum Betreiben einer landwirtschaftlichen Arbeitsmaschine **(1, 2)** mit einer Stützradanordnung und mit wenigstens einer verschwenkbaren Aufnahmevorrichtung **(5)** zur Adaption eines landwirtschaftlichen Arbeitsgerätes **(13),** wobei der landwirtschaftlichen Arbeitsmaschine **(1, 2)** in ihrem dem landwirtschaftlichem Arbeitsgerät **(13)** zugewandten Bereich ein oder mehrere Stützräder **(15)** zugeordnet sind,
**dadurch gekennzeichnet,**
**dass** die Stützlast (F1) des wenigstens einen Stützrades (15) einstellbar ist und das Stützrad (15) stets mit dem Boden (37) in Kontakt steht

2. Verfahren nach Anspruch 1,
**dadurch gekennzeichnet,**
**dass** die Stützlasten (F1) einer Vielzahl von Stützrädern (15) unabhängig voneinander einstellbar sind.

3. Verfahren nach einem oder mehreren der vorhergehenden Ansprüche,
**dadurch gekennzeichnet,**
**dass** die Einstellbarkeit der Stützlast (F1) des wenigstens einen Stützrades (15) zugleich eine Regelung des Auflagedrucks (p) des landwirtschaftlichen Arbeitsgerätes (12, 13) ermöglicht.

4. Verahren nach einem oder mehreren der vorhergehenden Ansprüche,
**dadurch gekennzeichnet,**
**dass** die Einstellbarkeit der Stützlast (F1) des wenigstens einen Stützrades (15) in Abhängigkeit von der Stützlast (F2) der Triebachse (14) und/oder der Stützlast (F3) der Lenkachse (67) der landwirtschaftlichen Erntemaschine (1, 2) erfolgt.

5. Verfahren nach einem oder mehreren der vorhergehenden Ansprüche,
**dadurch gekennzeichnet,**
**dass** die Stützlast (F1) des wenigstens einen Stützrades (15) dynamisch an die Stützlast

6. Landwirtschaftliche Arbeitsmaschine (1, 2) mit einer Stützradanordnung und mit wenigstens einer verschwenkbaren Aufnahmevorrichtung (5) zur Adaption eines landwirtschaftlichen Arbeitsgerätes (13), wobei der landwirtschaftlichen Arbeitsmaschine (1, 2) in ihrem dem landwirtschaftlichem Arbeitsgerät (13) zugewandten Bereich ein oder mehrere Stützräder (15) zugeordnet sind,
**dadurch gekennzeichnet,**
**dass** die Stützlast (F1) des wenigstens einen Stützrades (15) durch Druckbeaufschlagung oder Druckentlastung wenigstens eines, das wenigstens eine Stützrad (15) mit der verschwenkbaren Aufnahmevorrichtung (5) der landwirtschaftlichen Arbeitsmaschine (1, 2) verbindenden Hubzylinders (33) einstellbar ist. (F2) der Triebachse (14) und/oder die Stützlast (F3) der Lenkachse (67) der landwirtschaftlichen Erntemaschine (1, 2) anpassbar ist.

7. Vorrichtung nach Anspruch 6,
**dadurch gekennzeichnet,**
**dass** die Aufnahmevorrichtung (4, 5) mittels mindestens eines Hubzylinders (9) höhenverschwenkbar ist und die Druckbeaufschlagung/Druckentlastung des wenigstens einen Hubzylinders (33) des wenigstens einen Stützrades (15) an die Druckbeaufschlagung/Druckentlastung des zumindest einen Hubzylinders (9) der Aufnahmevorrichtung (4, 5) gekoppelt ist.

8. Vorrichtung nach einem oder mehreren der Ansprüche 6 und 7,
**dadurch gekennzeichnet,**
**dass** die Triebachse (14) und/oder die Lenkachse (67) der landwirtschaftlichen Erntemaschine (1, 2) mit lastsensierenden Aufnehmern (69, 70) ausgerüstet ist/sind die lastabhängige Eingangssignale (X2, X3) an wenigstens eine elektronische Verrechnungseinheit (71) übertragen in der ein Steuersignal (X1) generiert wird, das den Hydraulikdruck des wenigstens einen Hubzylinders (33) des zumindest einen Stützrades (15) regelt.

9. Vorrichtung nach einem oder mehreren der Ansprüche 6 bis 8,
**dadurch gekennzeichnet,**
**dass** der wenigstens eine Hubzylinder (33) des wenigstens einen Stützrades (15) zu- oder abschaltbar ist.

10. Vorrichtung nach einem oder mehreren der Ansprüche 6 bis 9,
**dadurch gekennzeichnet,**
**dass** die Stützlast (F1) des wenigstens einen Stützrades (15) dynamisch an die Stützlast (F2) der Triebachse (14) und/oder die Stützlast (F3) der Lenkachse (67) der landwirtschaftlichen Erntemaschine (1, 2) anpassbar ist und die dynamische Anpassung mittels an sich bekannte Proportionalventile (72) erfolgt.

11. Vorrichtung nach einem oder mehreren der Ansprüche 6 bis 10,
**dadurch gekennzeichnet,**
**dass** das Verhältnis der Stützlasten (F1, F2, F3) in der elektronischen Verrechnungseinheit (71) einstellbar ist.

12. Vorrichtung nach einem oder mehreren der Ansprüche 6 bis 11,
**dadurch gekennzeichnet,**
**dass** die Stützlast (F1) des wenigstens einen Stützrades (15) durch ein festes Kolbenflächenverhältnis (A1/A2 , A3/A4) zwischen dem wenigstens einen Hubzylinder (33) des wenigstens einen Stützrades (15) und dem wenigstens einen Hubzylinder (9) der Aufnahmevorrichtung (4, 5) bestimmt ist.

13. Vorrichtung nach Anspruch 12,
**dadurch gekennzeichnet,**
**dass** das Kolbenflächenverhältnis (A1/A2, A3/A4) proportional dem Stützlastverhältnis (F1/F) zwischen der Stützlast (F1) des wenigstens einen Stützrades (15) und der Stützlast (F) des das Stützrad (15) mit der landwirtschaftlichen Erntemaschine (1, 2) verbindenden zumindest einen Hubzylinders (9) ist.

14. Vorrichtung nach einem oder mehreren der Ansprüche 6 bis 13,
**dadurch gekennzeichnet,**
**dass** der wenigstens eine Hubzylinder (33) des wenigstens einen Stützrades (15) in einer im Wesentlichen vertikalen Richtung zwischen dem Stützrad (15) und der Aufnahmevorrichtung (4, 5) angeordnet ist.

15. Vorrichtung nach einem oder mehreren der Ansprüche 6 bis 14,
**dadurch gekennzeichnet,**
**dass** zwischen der Aufnahmevorrichtung (4, 5) und der landwirtschaftlichen Erntemaschine (1, 2) ein Zugzylinder (75) zwischengeschaltet ist.

16. Vorrichtung nach einem oder mehreren der Ansprüche 6 bis 15,
**dadurch gekennzeichnet,**
**dass** das wenigstens eine Stützrad (15) eine im Wesentlichen in vertikaler Richtung orientierte Relativbewegung zur Aufnahmevorrichtung (4, 5) und/oder zur landwirtschaftlichen Erntemaschine (1, 2) ausführt.

17. Vorrichtung nach einem oder mehreren der vorhergehenden Ansprüche,
**dadurch gekennzeichnet,**
**dass** das wenigstens eine Stützrad (15) lenkbar ist.

## Claims

1. A method of operating an agricultural working machine (1, 2) comprising a support wheel arrangement and at least one pivotable receiving device (5) for the adaptation of an agricultural working assembly (13), wherein one or more support wheels (15) are associated with the agricultural working machine (1, 2) in its region that is towards the agricultural working assembly (13),
**characterised in that**
the support load (F1) of the at least one support wheel (15) is adjustable and the support wheel (15) is always in contact with the ground (37).

2. A method according to claim 1 **characterised in that** the support loads (F1) of a plurality of support wheels (15) are adjustable independently of each other.

3. A method according to one or more of the preceding claims **characterised in that** the adjustability of the support load (F1) of the at least one support wheel (15) at the same time permits regulation of the bearing pressure (p) of the agricultural working assembly (12, 13).

4. A method according to one or more of the preceding claims **characterised in that** the adjustability of the support load (F1) of the at least one support wheel (15) is effected in dependence on the support load (F2) of the drive axle (14) and/or the support load (F3) of the steering axle (67) of the agricultural harvester (1, 2).

5. A method according to one or more of the preceding claims **characterised in that** the support load (F1) of the at least one support wheel (15) is dynamically adaptable to the support load (F2) of the drive axle (14) and/or the support load (F3) of the steering axle (67) of the agricultural harvester (1, 2).

6. An agricultural working machine (1, 2) comprising a support wheel arrangement and at least one pivotable receiving device (5) for the adaptation of an agricultural working assembly (13), wherein one or more support wheels (15) are associated with the agricultural working machine (1, 2) in its region that is towards the agricultural working assembly (13),
**characterised in that**
the support load (F1) of the at least one support wheel (15) is adjustable by pressure actuation or pressure relief of at least one stroke cylinder (33) connecting the at least one support wheel (15) to the pivotable receiving device (5) of the agricultural working machine (1, 2).

7. Apparatus according to claim 6 **characterised in that** the receiving device (4, 5) is pivotable in respect of height by means of at least one stroke cylinder (9) and pressure actuation/pressure relief of the at least one stroke cylinder (33) of the at least one support wheel (15) is coupled to the pressure actuation/pressure relief of the at least one stroke cylinder (9) of the receiving device (4, 5).

8. Apparatus according to one or more of claims 6 and 7 **characterised in that** the drive axle (14) and/or the steering axle (67) of the agricultural harvester (1, 2) is/are equipped with load-sensing pickups (69, 70) which transmit load-dependent input signals (X2, X3) to at least one electronic calculating unit (71) in which there is generated a control signal (X1) which regulates the hydraulic pressure of the at least one stroke cylinder (33) of the at least one support wheel (15).

9. Apparatus according to one or more of claims 6 to 8 **characterised in that** the at least one stroke cylinder (33) of the at least one support wheel (15) can be switched on or off.

10. Apparatus according to one or more of claims 6 to 9 **characterised in that** the support load (F1) of the at least one support wheel (15) can be dynamically adapted to the support load (F2) of the drive axle (14) and/or the support load (F3) of the steering axle (67) of the agricultural harvester (1, 2) and dynamic adaptation is effected by means of per se known proportional valves (72).

11. Apparatus according to one or more of claims 6 to 10 **characterised in that** the ratio of the support loads (F1, F2, F3) is adjustable in the electronic calculating unit (71).

12. Apparatus according to one or more of claims 6 to 11 **characterised in that** the support load (F1) of the at least one support wheel (15) is determined by a fixed piston area ratio (A1/A2, A3/A4) between the at least one stroke cylinder (33) of the at least one support wheel (15) and the at least one stroke cylinder (9) of the receiving device (4, 5).

13. Apparatus according to claim 12 **characterised in that** the piston area ratio (A1/A2, A3/A4) is proportional to the support load ratio (F1/F) between the support load (F1) of the at least one support wheel (15) and the support load (F) of the at least one stroke cylinder (9) connecting the support wheel (15) to the agricultural harvester (1,2).

14. Apparatus according to one or more of claims 6 to 13 **characterised in that** the at least one stroke cylinder (33) of the at least one support wheel (15) is arranged in a substantially vertical direction between the support wheel (15) and the receiving device (4, 5).

15. Apparatus according to one or more of claims 6 to 14 **characterised in that** a pulling cylinder (75) is interposed between the receiving device (4, 5) and the agricultural harvester (1, 2).

16. Apparatus according to one or more of claims 6 to 15 **characterised in that** the at least one support wheel (15) performs a relative movement oriented substantially in a vertical direction with respect to the receiving device (4, 5) and/or the agricultural harvester (1, 2),

17. Apparatus according to one or more of the preceding claims **characterised in that** the at least one support wheel (15) is steerable.

## Revendications

1. Procédé pour faire fonctionner une machine de travail agricole (1, 2) équipée d'un aménagement de roue porteuse et d'au moins un dispositif récepteur pivotant (5) pour l'adaptation d'un outil agricole (13), dans lequel on affecte une ou plusieurs roues porteuses (15) à la machine de travail agricole (1, 2) dans sa zone tournée vers l'outil agricole (13), **caractérisé en ce que**
la charge d'appui (F1) de la au moins une roue porteuse (15) est réglable et la roue porteuse (15) est en permanence en contact avec le sol (37).

2. Procédé selon la revendication 1, **caractérisé en ce que**
les charges d'appui (F1) d'une pluralité de roues porteuses (15) sont réglables indépendamment l'une de l'autre.

3. Procédé selon une ou plusieurs des revendications précédentes, **caractérisé en ce que**
la capacité de réglage de la charge d'appui (F1) de la au moins une roue porteuse (15) permet en même temps une régulation de la pression d'appui (p) de l'outil agricole (12,13).

4. Procédé selon une ou plusieurs des revendications précédentes, **caractérisé en ce que**
la capacité de réglage de la charge d'appui (F1) de la au moins une roue porteuse (15) se fait en fonction de la charge d'appui (F2) de l'essieu moteur (14) et/ou de la charge d'appui (F3) de l'essieu directeur (67) de la moissonneuse agricole (1, 2).

5. Procédé selon une ou plusieurs des revendications précédentes, **caractérisé en ce que** la charge d'appui (F1) de la au moins une roue porteuse (15) peut être adaptée dynamiquement à la charge d'appui (F2) de l'essieu moteur (14) et/ou à la charge d'appui (F3) de l'essieu directeur (67) de la moissonneuse agricole (1, 2).

6. Machine de travail agricole (1, 2) équipée d'un aménagement de roue porteuse et d'au moins un dispositif récepteur pivotant (5) pour l'adaptation d'un outil agricole (13), dans laquelle on affecte une ou plusieurs roues porteuses (15) à la machine de travail agricole (1, 2) dans sa zone tournée vers l'outil agricole (13), **caractérisée en ce que**
la charge d'appui (F1) de la au moins une roue porteuse (15) peut être réglée par mise sous pression ou décompression d'au moins un cylindre de levage (33) raccordant la au moins une roue porteuse (15) au dispositif récepteur pivotant (5) de la machine de travail agricole (1, 2).

7. Dispositif selon la revendication 6,
**caractérisé en ce que**
le dispositif récepteur (4, 5) peut pivoter en hauteur au moyen d'au moins un cylindre de levage (9) et la mise sous pression/décompression d'au moins un cylindre de levage (33) de la au moins une roue porteuse (15) est couplée à la mise sous pression/décompression du au moins un cylindre de levage (9) du dispositif récepteur (4, 5).

8. Dispositif selon une ou plusieurs des revendications 6 et 7, **caractérisé en ce que**
l'essieu moteur (14) et/ou l'essieu directeur (67) de la moissonneuse agricole (1, 2) est/sont équipés de capteurs (69, 70) détecteurs de charge, qui transmettent des signaux d'entrée dépendant de la charge (X2, X3) à au moins une unité de calcul électronique (71), dans laquelle est généré un signal de commande (X1), qui régule la pression hydraulique du au moins un cylindre de levage (33) de la au moins une roue porteuse (15).

9. Dispositif selon une ou plusieurs des revendications 6 à 8, **caractérisé en ce que**
le au moins un cylindre de levage (33) de la au moins une roue porteuse (15) peut être mis en service ou hors service.

10. Dispositif selon une ou plusieurs des revendications 6 à 9, **caractérisé en ce que**
la charge d'appui (F1) de la au moins une roue porteuse (15) peut être adaptée dynamiquement à la charge d'appui (F2) de l'essieu moteur (14) et/ou à la charge d'appui (F3) de l'essieu directeur (67) de la moissonneuse agricole (1, 2) et l'adaptation dynamique s'effectue au moyen de soupapes proportionnelles (72) connues en soi.

11. Dispositif selon une ou plusieurs des revendications 6 à 10, **caractérisé en ce que**
l'on peut régler le rapport des charges d'appui (F1, F2, F3) dans l'unité de calcul électronique (71).

12. Dispositif selon une ou plusieurs des revendications 6 à 11, **caractérisé en ce que**
la charge d'appui (F1) de la au moins une roue porteuse (15) est déterminée par un rapport fixe des surfaces de pistons (A1/A2, A3/A4) entre le au moins un cylindre de levage (33) de la au moins une roue porteuse (15) et le au moins un cylindre de levage (9) du dispositif récepteur (4, 5).

13. Dispositif selon la revendication 12,
**caractérisé en ce que**
le rapport des surfaces de pistons (A1/A2, A3/A4) est proportionnel au rapport des charges d'appui (F1/F) entre la charge d'appui (F1) de la au moins une roue porteuse (15) et la charge d'appui (F) du au moins un cylindre de levage (9) raccordant la roue porteuse (15) à la moissonneuse agricole (1, 2).

14. Dispositif selon une ou plusieurs des revendications 6 à 13,
**caractérisé en ce que**
le au moins un cylindre de levage (33) de la au moins une roue porteuse (15) est aménagé dans une direction sensiblement verticale entre la roue porteuse (15) et le dispositif récepteur (4, 5).

15. Dispositif selon une ou plusieurs des revendications 6 à 14, **caractérisé en ce que**
l'on intercale un cylindre de traction (75) entre le dispositif récepteur (4, 5) et la moissonneuse agricole (1, 2).

16. Dispositif selon une ou plusieurs des revendications 6 à 15, **caractérisé en ce que**
la au moins une roue porteuse (15) exécute un mouvement relatif orienté sensiblement dans la direction verticale par rapport au dispositif récepteur (4, 5) et/ou par rapport à la moissonneuse agricole (1, 2).

17. Dispositif selon une ou plusieurs des revendications précédentes,
**caractérisé en ce que** la au moins une roue porteuse (15) est orientable.
